# EUROPEAN PATENT APPLICATION

(11) **EP 4 207 795 A1**
(43) Date of publication of application: **05.07.2023**
(21) Application number: 21891054.5
(22) Date of filing: 05.11.2021
(51) Int. Cl.: H04Q 11/00

(54) **SERVICE CONFIGURATION METHOD, OPTICAL NETWORK UNIT, OPTICAL LINE TERMINAL, AND MEDIUM**

(30) Priority: 11.11.2020 CN 202011252950
(71) Applicant: ZTE Corporation, Shenzhen, Guangdong 518057 (CN)
(72) Inventor: HE, Feng, Shenzhen, Guangdong 518057 (CN); SUN, Yimu, Shenzhen, Guangdong 518057 (CN)
(74) Representative: Canzler & Bergmeier Patentanwälte Partnerschaft mbB
(86) International application number: PCT/CN2021/129043
(87) International publication number: WO 2022/100529

(57) **Abstract**

Provided in the present disclosure is a service configuration method applied to an optical network unit (ONU), comprising: mapping initial service configuration data to at least one first management entity on a user network interface side under a management and control interface protocol, and generating first service configuration information on the user network interface side; sending the first service configuration information to an optical line terminal (OLT), so that the OLT generates, according to the first service configuration information, second service configuration information on an access node interface side; and receiving the second service configuration information issued by the OLT, and performing service configuration according to the first service configuration information and the second service configuration information. Further provided in the present disclosure are a service configuration method applied to an OLT, an ONU, an OLT, and a computer-readable medium..

## Description

### TECHNICAL FIELD

The present disclosure relates to the technical field of communications.

### BACKGROUND

The Gigabit-Capable Passive Optical Networks (GPON) technology is a passive optical network access technology. A GPON system includes an Optical Line Terminal (OLT) and an Optical Network Unit (ONU). The OLT configures and manages the ONU through the ONU Management and Control Interface (OMCI, also called the Management and Control Interface Protocol). With popularization and application of the GPON systems in fixed access networks, networking of the GPON systems becomes more and more flexible, resulting more and more demands for configuration of ONUs in management systems through multiple protocols.

### SUMMARY

The first aspect of the present disclosure provides a service configuration method applied to an optical network unit, including: mapping initial service configuration data obtained based on a non-management and control interface protocol to at least one first managed entity at a User Network Interface side under the Management and Control Interface Protocol, and generating first service configuration information of the User Network Interface side; sending the first service configuration information to an optical line terminal for generating second service configuration information of an Access Node Interface side by the optical line terminal according to the first service configuration information; and receiving the second service configuration information sent by the optical line terminal, and performing service configuration according to the first service configuration information and the second service configuration information.

The second aspect of the present disclosure provides a service configuration method applied to an optical line terminal, including: receiving first service configuration information of a User Network Interface side sent by an optical network unit, and generating second service configuration information of an Access Node Interface side according to the first service configuration information, wherein the first service configuration information is generated after the optical network unit maps initial service configuration data obtained based on a non-management and control interface protocol to at least one first managed entity at the User Network Interface side under the Management and Control Interface Protocol; and sending the second service configuration information to the optical network unit for performing service configuration by the optical network unit according to the first service configuration information and the second service configuration information.

The third aspect of the present disclosure provides an optical network unit, including: one or more processors; and a memory configured to store one or more programs, wherein when the one or more programs are executed by the one or more processors, the one or more processors carry out the above service configuration method applied to the optical network unit.

The fourth aspect of the present disclosure provides an optical line terminal, including: one or more processors; and a memory configured to store one or more programs, wherein when the one or more programs are executed by the one or more processors, the one or more processors carry out the above service configuration method applied to the optical line terminal.

The fifth aspect of the present disclosure provides a computer-readable medium having a computer program stored thereon, wherein when the computer program is executed by a processor, the above service configuration method applied to the optical network unit is carried out.

The sixth aspect of the present disclosure provides a computer-readable medium having a computer program stored thereon, wherein when the computer program is executed by a processor, the above service configuration method applied to the optical line terminal is carried out.

### BRIEF DESCRIPTION OF DRAWINGS

FIG. 1 is a flowchart illustrating a service configuration method according to the present disclosure;
FIG. 2 is another flowchart illustrating a service configuration method according to the present disclosure;
FIG. 3 is another flowchart illustrating a service configuration method according to the present disclosure;
FIG. 4 is another flowchart illustrating a service configuration method according to the present disclosure;
FIG. 5 is a detailed flowchart of operation S5 in the service configuration method shown in FIG. 4 according to the present disclosure;
FIG. 6 is a schematic structural diagram of an optical network unit according to the present disclosure;
Figure 7 is a schematic structural diagram of an optical line terminal according to the present disclosure;
FIG. 8 is a schematic structural diagram of a computer-readable medium according to the present disclosure; and
FIG. 9 is a schematic structural diagram of a computer-readable medium according to the present disclosure.

### DETAIL DESCRIPTION OF EMBODIMENTS

In order to enable those of ordinary skill in the art to better understand the technical solutions of the present disclosure, a service configuration method, an optical network unit, an optical line terminal and a computer-readable medium provided by the present disclosure are described in detail below with reference to the drawings.

Exemplary embodiments will be described more fully below with reference to the drawings, but the exemplary embodiments may be embodied in different forms, and should not be interpreted as being limited to the embodiments described herein. Rather, the exemplary embodiments are provided to make the present disclosure thorough and complete, and are intended to enable those of ordinary skill in the art to fully understand the scope of the present disclosure.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of the described features, integers, operations, elements and/or components, but do not exclude the presence or addition one or more other features, integers, operations, elements, components and/or combinations thereof.

It should be understood that the terms "first", "second" and the like may be used herein to describe various elements, but those elements are not limited by those terms. Those terms are merely used for distinguishing one element from the other element. Therefore, without departing from the teaching of the present disclosure, a first element, a first component, or a first module described below can also be called a second element, a second component, or a second module.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The service configuration method, the ONU, the OLT and the computer-readable medium provided by the present disclosure can be applied to the GPON systems, X-Gigabit-Capable Passive Optical Networks (XGPON) systems and other optical network systems using the ONUs and the OLTs. The ONU maps initial service configuration data obtained based on a non-management and control interface protocol to a managed entity (ME) under the Management and Control Interface Protocol, interchanges information with the OLT, and performs service configuration based on the mapped service configuration information corresponding to the non-management and control interface protocol and service configuration information corresponding to the Management and Control Interface Protocol, thus solving the problems of network systems such as management conflict, configuration mismatch and configuration overwriting existing between the Management and Control Interface Protocol and the non-management and control interface protocol in a case where multiple protocols participate in configuration management.

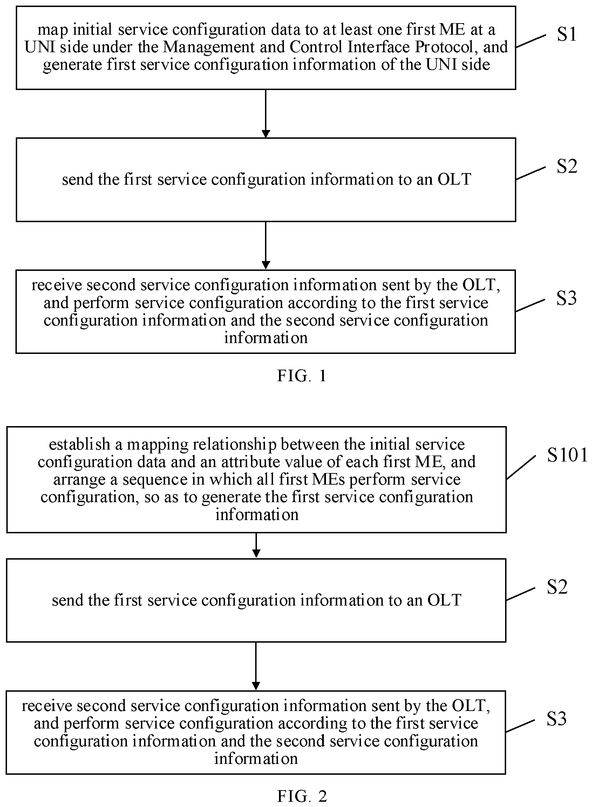

FIG. 1 is a flowchart illustrating a service configuration method according to the present disclosure. As shown in FIG. 1, the service configuration method according to the present disclosure is applied to an ONU and includes operations S1 to S3.

In operation S1, initial service configuration data is mapped to at least one first ME at a User Network Interface (UNI) side under the Management and Control Interface Protocol, and first service configuration information of the UNI side is generated.

The initial service configuration data is obtained based on a non-management and control interface protocol.

In the operation S1, the first service configuration information is configured to instruct a corresponding first ME at the UNI side to perform service configuration. Specifically, according to the Management and Control Interface Protocol, the service configuration is performed through a plurality of MEs and association relationships between the MEs.

Names of the MEs are represented in the form of name fields, and the table 1 below is a name field table. In the table 1, the name fields of the MEs are recorded (with "managed entity" omitted), and name field prefixes of the name fields are recorded (with "ME" omitted).

**Table 1-Name Field Table**

| Name Field of Managed Entity | Name Field Prefix |
|---|---|
| Ethernet UNI based on Point-to-Point Tunneling Protocol | PPTP Ethernet UNI |
| Plain Old Telephone Service UNI based on Point-to-Point Tunneling Protocol | PPTP POTS UNI |
| extended VLAN tagging operation configuration data | Extended VLAN tagging operation configuration data |
| VLAN tagging filter data | VLAN tagging filter data |
| routing host configuration data | IP host config data |
| agent configuration data of session initiation protocol | SIP agent config data |
| Media Gateway Controller configuration data | MGC config data |
| multicast operation profile | Multicast operations profile |
| MAC bridge service profile | MAC bridge service profile |
| MAC bridge port configuration data | MAC bridge port configuration data |
| GEM interworking termination point | GEM interworking termination point |
| GEM port network connection termination point | GEM port network CTP |
| priority queue | Priority queue |

For example, in service configuration of a Local Area Network (LAN, also called an intranet) interface, Virtual Local Area Network (VLAN) configuration of the LAN interface is performed through the Extended VLAN tagging operation configuration data ME, multicast configuration of the LAN interface is performed through the Multicast operations profile ME and so on. During the service configuration of the LAN interface, the service configuration of the LAN interface is completed through service configuration of each of a plurality of MEs together with association configuration between the plurality of MEs. In some embodiments, the first service configuration information is configured to instruct the corresponding first ME at the UNI side and other related MEs to perform service configuration.

In some embodiments, mapping the initial service configuration data to the first ME needs to be performed according to a corresponding mapping relationship table which is set in advance, and mapping relationships between the initial service configuration data and the MEs are recorded in the mapping relationship table. In the mapping relationship table shown in the table 2 below, types of the initial service configuration data or interfaces corresponding to the initial service configuration data are recorded, and the name field prefixes of the name fields of the MEs are recorded.

**Table 2-Mappling Relationship Table**

| Type of Initial Service Configuration Data or Interface corresponding to Initial Service Configuration Data | Name Field Prefix of Name Field of ME |
|---|---|
| ETH interface | PPTP Ethernet UNI |
| POTS interface | PPTP POTS UNI |
| VLAN configuration | Extended VLAN tagging operation configuration data |
| VLAN whitelist configuration | VLAN tagging filter data |
| routing interface configuration | IP host config data |
| SIP voice parameter configuration | SIP agent config data |
| H.248 voice parameter configuration | MGC config data |
| controllable multicast configuration | Multicast operations profile |
| MAC bridge parameter configuration | MAC bridge service profile |
| MAC bridge port parameter configuration | MAC bridge port configuration data |

It should be noted that the above description of the mapping relationships among the name field prefixes, the initial service configuration data and the MEs, and the specific form of the mapping relationship table are merely one implementation of the present disclosure, and does not constitute any limitation to the technical solutions of the present disclosure, and other forms of the names, other representation ways of the mapping relationships and establishment processes of corresponding mapping relationships are also applicable to the technical solutions of the present disclosure.

In some embodiments, the non-management and control interface protocol includes at least one of the Simple Network Management Protocol (SNMP), the Custom Premise Equipment (CPE) Wide Area Network (WAN) Management Protocol (CWMP), a local WEB configuration protocol, or a factory pre-configured protocol. Specifically, the CWMP is the Technical Report 069 (TR069) protocol, and an Automatic Configuration Server (ACS) may perform LAN interface configuration and high-level service configuration for the OLTN through the protocol.

It should be noted that the above description of each non-management and control interface protocol is merely one implementation of the present disclosure, and does not constitute any limitation to the technical solutions of the present disclosure, and other non-management and control interface protocols capable of performing service configuration for the ONU are also applicable to the technical solutions of the present disclosure.

In operation S2, the first service configuration information is sent to an OLT.

In the operation S2, the first service configuration information is sent to the OLT for generating second service configuration information of an Access Node Interface (ANI) side by the OLT according to the first service configuration information.

The OLT performs supplementation to obtain complete service configuration information according to the first service configuration information, and sends the supplemented part, i.e. the second service configuration information, to the ONU, with the second service configuration information configured to instruct a corresponding second ME at the ANI side to perform service configuration.

In some embodiments, sending the first service configuration information to the OLT (i.e., the operation S2) includes: synchronously reporting the first service configuration information to the OLT through a Management Information Base (MIB).

In some embodiments, the OLT generates the second service configuration information of the ANI side according to the first service configuration information, integrates the first service configuration information and the second service configuration information, and sends the obtained complete service configuration information, i.e. the integrated first service configuration information and second service configuration information, to the ONU.

In operation S3, the second service configuration information sent by the OLT is received, and service configuration is performed according to the first service configuration information and the second service configuration information.

In the operation S3, the service configuration is performed according a combination of the first service configuration information of the UNI side and the second service configuration information of the ANI side.

FIG. 2 is another flowchart illustrating a service configuration method according to the present disclosure. The service configuration method shown in FIG. 2 includes operation S101 and operations S2 and S3, and the operations S2 and S3 in the service configuration method shown in FIG. 2 are the same as the operations S2 and S3 in the service configuration method shown in FIG. 1. For the purpose of concise description, the description of the same operations will be omitted below.

In operation S101, a mapping relationship between the initial service configuration data and an attribute value of each of the at least one first ME is established, and a sequence in which all first MEs perform service configuration is arranged, so as to generate the first service configuration information.

The sequence in which all the first MEs perform service configuration is arranged along a direction from the UNI side to the ANI side or a direction from the LAN interface side to the ANI side. For example, the sequence in which all the first MEs at the UNI side perform service configuration is arranged as follows (represented in the form of the name field prefixes of the MEs): UNI-G (interface), PPTP Ethernet UNI, Extended VLAN tagging configuration data, MAC bridge port configuration data, VLAN tagging filter data, MAC bridge service profile.

In some embodiments, the first service configuration information is in the form of a service configuration model or a service configuration blueprint.

In some embodiments, the attribute value of the first ME includes an ME instance identification. The ME instance identification not only serves as an identifier of the corresponding ME, but is also configured to indicate the non-management and control interface protocol corresponding to the initial service configuration data. The OLT determines the non-management and control interface protocol corresponding to the attribute value of the ME according to the ME instance identification, so as to configure the attribute value of the ME at the ANI side. In some embodiments, the non-management and control interface protocol is indicated by a field where the ME instance identification is located, for example, the Management and Control Interface Protocol is indicated by field range 0 to 60533, the SNMP is indicated by field range 60534 to 61533, a policy manually configured by a user is indicated by field range 61534 to 62533, the local WEB configuration protocol is indicated by field range 62534 to 63533, the factory pre-configured protocol is indicated by field range 63534 to 64533, and the TR069 protocol is indicated by field range 64534 to 65534.

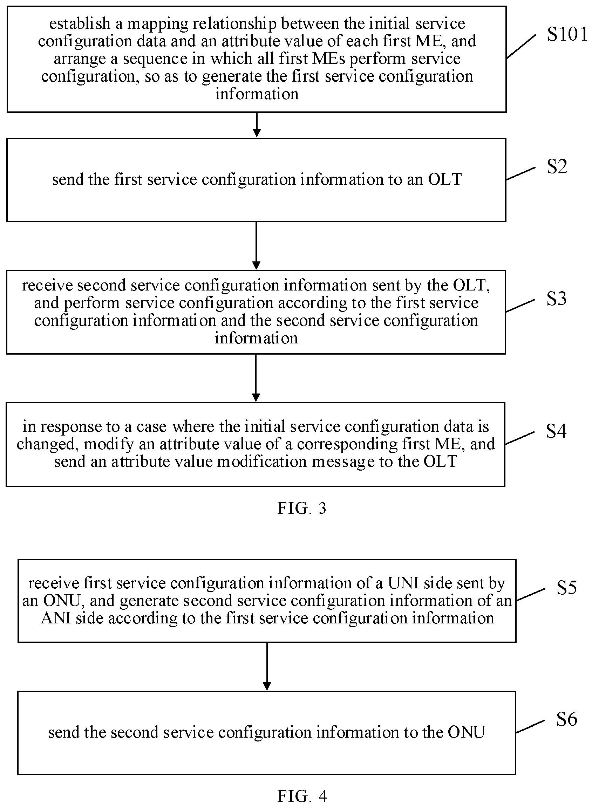

FIG. 3 is another flowchart illustrating a service configuration method according to the present disclosure. The service configuration method shown in FIG. 3 includes operation S101 and operations S2 to S4, and the operation S101 and the operations S2 and S3 in the service configuration method shown in FIG. 3 are the same as the operation S101 in the service configuration method shown in FIG. 2 and the operations S2 and S3 in the service configuration method shown in FIG. 1. For the purpose of concise description, the description of the same operations will be omitted below.

In operation S4, in response to a case where the initial service configuration data is changed, an attribute value of a corresponding first ME is modified, and an attribute value modification message is sent to the OLT.

In the operation S4, the attribute value modification message is sent to the OLT for modifying an attribute value of each corresponding second ME by the OLT to maintain consistency of configurations of the two sides.

The service configuration method shown in FIG. 1, FIG. 2 or FIG. 3 may be applied to map the initial service configuration data obtained based on the non-management and control interface protocol to the ME under the Management and Control Interface Protocol, generate the mapped service configuration information corresponding to the non-management and control interface protocol, send the mapped service configuration information to the OLT, receive the service configuration information corresponding to the Management and Control Interface Protocol obtained by the OLT according to the mapped service configuration information, and finally perform the service configuration based on the mapped service configuration information corresponding to the non-management and control interface protocol and the service configuration information corresponding to the Management and Control Interface Protocol, thus solving the problems such as management conflict, configuration mismatch and configuration overwriting existing between the Management and Control Interface Protocol and the non-management and control interface protocol in a case where multiple protocols participate in configuration management.

FIG. 4 is another flowchart illustrating a service configuration method according to the present disclosure. The service configuration method shown in FIG. 4 is applied to an OLT and includes operations S5 and S6.

In operation S5, first service configuration information of a UNI side sent by an ONU is received, and second service configuration information of an ANI side is generated according to the first service configuration information.

The first service configuration information is generated after the ONU maps initial service configuration data to at least one first ME at the UNI side under the Management and Control Interface Protocol, and the initial service configuration data is obtained based on a non-management and control interface protocol.

In operation S6, the second service configuration information is sent to the ONU.

In the operation S6, the second service configuration information is sent to the ONU for performing service configuration by the ONU according to the first service configuration information and the second service configuration information.

In some embodiments, an attribute value of the first ME includes an ME instance identification. The ME instance identification not only serves as an identifier of the corresponding ME, but is also configured to indicate the non-management and control interface protocol corresponding to the initial service configuration data. The method further includes: identifying the ME instance identification, and displaying the initial service configuration data and the non-management control interface protocol corresponding thereto, or displaying the initial service configuration data and the non-management control interface protocol corresponding thereto through an Element Management System (EMS), so as to allow a user to configure the initial service configuration data through the OLT or the EMS.

The service configuration method shown in FIG. 4 may be applied to receive the mapped service configuration information corresponding to the non-management and control interface protocol sent by the ONU, accordingly generate the service configuration information corresponding to the Management and Control Interface Protocol, and send the service configuration information to the ONU to perform the service configuration, thus solving the problems such as the management conflict, the configuration mismatch and the configuration overwriting existing between the Management and Control Interface Protocol and the non-management and control interface protocol in the case where the multiple protocols participate in the configuration management.

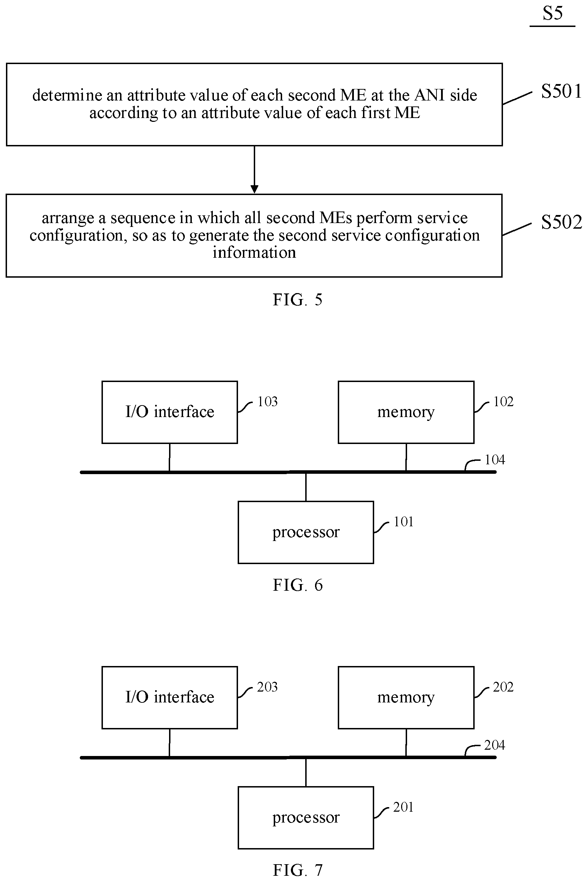

FIG. 5 is a detailed flowchart of operation S5 in the service configuration method shown in FIG. 4 according to the present disclosure. The first service configuration information is obtained after the ONU establishes mapping relationships between the initial service configuration data and attribute values of a plurality of first MEs and arranges a sequence in which the plurality of first MEs perform service configuration. As shown in FIG. 5, in the operation S5, generating the second service configuration information of the ANI side according to the first service configuration information includes operations S501 and S502.

In operation S501, an attribute value of each second ME at the ANI side is determined according to an attribute value of each first ME.

In the operation S501, the first service configuration information is parsed, and the attribute value of each second ME is determined according to the attribute value of each first ME obtained by the parsing.

In some embodiments, the operation S501 of determining the attribute value of each second ME at the ANI side according to the attribute value of each first ME includes: determining a non-management and control interface protocol corresponding to the attribute value of each first ME according to the ME instance identification in the attribute value, and determining the attribute value of each second ME; and associating each first ME with each second ME according to the ME instance identifications.

In operation S502, a sequence in which all second MEs perform service configuration is arranged, so as to generate the second service configuration information.

Like the operation S101, the operation S502 includes arranging the sequence in which all the second MEs perform service configuration along a direction from the UNI side to the ANI side or a direction from the LAN interface side to the ANI side. For example, the sequence in which all the second MEs at the ANI side perform service configuration is arranged as follows (represented in the form of the name field prefixes of the MEs): MAC bridge port configuration data, VLAN tagging filter data, GEM interworking termination point, GEM port network CTP, Priority queue, T-CONT (bearer).

The service configuration methods provided by the present disclosure are described in detail below in conjunction with practical applications.

A first ONU which needs to access a network by means of bridging acquires initial service configuration data according to a factory pre-configured protocol, and corresponding types of the service configuration data include: Ethernet (ETH) interface data, VLAN configuration data, VLAN whitelist configuration data, MAC bridge parameter configuration data, and MAC bridge port parameter configuration data; the ETH interface data instructs that an ETH1 interface is the used interface; the VLAN configuration data instructs that a VLAN100 tag mode is adopted: specifically, when the VLAN100 tag mode operates, a VLAN100 tag is added to an uplink message containing no tag and a VLAN100 tag is stripped off from a downlink message carrying the tag; the MAC bridge parameter configuration data instructs that ETH interfaces are isolated from each other; and the MAC bridge port parameter configuration data instructs that the number of learned physical addresses (MAC addresses) of the ETH1 interface is limited to 10.

Firstly, the ONU maps the initial service configuration data to a plurality of first MEs at a UNI side, and generates first service configuration information of the UNI side. For example, the ETH interface data is mapped to a ME with the name field prefix of PPTP ETH UNI, the VLAN configuration data is mapped to a ME with the name field prefix of Extended VLAN tagging operation configuration data, the VLAN whitelist configuration data is mapped to a ME with the name field prefix of VLAN tagging filter data (UNI side), the MAC bridge parameter configuration data is mapped to a ME with the name field prefix of MAC bridge service profile, and the MAC bridge port parameter configuration data is mapped to a ME with the name field prefix of MAC bridge port configuration data (UNI side).

A mapping relationship between the initial service configuration data and an attribute value of each first ME is established. For example, an ME instance identification corresponding to PPTP ETH UNI is set to 63534 to point to the ETH1 interface. An ME instance identification of each attribute value corresponding to Extended VLAN tagging operation configuration data is set to 63538, which falls between 63534 and 64533 and indicates that the non-management and control interface protocol to which the attribute value belongs is the factory pre-configured protocol; the Association type is set 2 to point to the ME corresponding to PPTP ETH UNI; the Downstream mode is set to 0 to indicate that a downlink VLAN action is negated; the Received frame VLAN tagging operation table is configured to add the VLAN100 tag to the uplink message containing no tag, and a specific form of the VLAN100 tag may be {15,4096,x,15,4096,x,0,(1,15,x,x,0,100,x)}; and an associated ME pointer is set to 63534 to point to the ETH1 interface. An ME instance identification of each attribute value corresponding to VLAN tagging filter data is set to 63540 to point to an ME with the name field prefix of MAC bridge port configuration data at the same side, so as to establish an association relationship; the VLAN filter list is set to 0x0064 to indicate the VLAN100 tag mode; and the Forward operation is set to 0x10 to indicate that a message containing a tag in the VLAN filter list is forwarded and a message without a tag in the VLAN filter list is discarded. An ME instance identification of each attribute value corresponding to MAC bridge service profile is set to 63539, which also indicate that the non-management and control interface protocol to which the attribute value belongs is the factory pre-configured protocol; and the Port bridging ind is set to 0 to indicate that the ETH interfaces are isolated from each other. An ME instance identification of each attribute value corresponding to MAC bridge port configuration data is set to 63540, which also indicates that the non-management and control interface protocol to which the attribute value belongs is the factory pre-configured protocol; the MAC learning depth is set to 10 to indicate that the number of learned physical addresses of the corresponding interface is limited to 10; a TP pointer is set to 63534 to point to the ETH1 interface; and the Bridge ID pointer is set to 63539 to point to a ME with the name field prefix of MAC bridge service profile, so as to establish an association relationship.

A sequence in which all the first MEs perform service configuration is arranged along a direction from the UNI side to an ANI side to generate the first service configuration information. For example, the sequence is arranged as follows (represented in the form of the name field prefixes of the MEs): UNI-G, PPTP Ethernet UNI, Extended VLAN tagging operation configuration data, MAC bridge port configuration data, VLAN tagging filter data, MAC bridge service profile.

Meanwhile, the ONU synchronously reports the first service configuration information to an OLT through an MIB. The OLT receives and parses the first service configuration information, and determines each second ME which needs to be configured and an attribute value of each second ME according to the attribute value of each first ME obtained by the parsing. For example, the determined second MEs include the MEs which respectively have the name field prefixes of MAC bridge port configuration data (ANI side), VLAN tagging filter data (ANI side), GEM interworking termination point, GEM port network CTP, and T-CONT (bearer). An ME instance identification of each attribute value corresponding to MAC bridge configuration data is set to 1, which falls between 0 and 60533 and indicates that the protocol corresponding to the attribute value is the Management and Control Interface Protocol; a TP pointer is set to 2 to point to the ME with the name field prefix of GEM interworking termination point, so as to establish an association relationship; and the Bridge ID pointer is set to 63539 to point to the ME with the name field prefix of MAC bridge service profile at the UNI side, so as to establish an association relationship. An ME instance identification of each attribute value corresponding to VLAN tagging filter data is set to 1 to point to the ME with the name field prefix of MAC bridge port configuration data at the same side, so as to establish an association relationship; and the remaining attribute values are set to be the same as the attribute values of the ME having the same name as the UNI side. An ME instance identification of each attribute value corresponding to GEM interworking termination point is set to 2, which also indicates that the protocol corresponding to the attribute value is the Management and Control Interface Protocol; and the GEM port network CTP connectivity pointer is set to 3 to point to the ME with the name field prefix of GEM port network CTP, so as to establish an association relationship. An ME instance identification of each attribute value corresponding to GEM port network CTP is also set to 3, which also indicates that the protocol corresponding to the attribute value is the Management and Control Interface Protocol; and the Alloc-ID is set to 1026 to indicate a type of data capable of being borne.

The OLT arranges a sequence in which all the second MEs perform service configuration, so as to generate second service configuration information. The sequence is arranged as follows (represented in the form of the name field prefixes of the MEs): MAC bridge port configuration data, VLAN tagging filter data, GEM interworking termination point, GEM port network CTP, T-CONT.

Then, the OLT sends the second service configuration information to the ONU, and the ONU receives the second service configuration information from the OLT and performs service configuration according to the first service configuration information and the second service configuration information.

FIG. 6 is a schematic structural diagram of an ONU according to the present disclosure. As shown in FIG. 6, the ONU includes one or more processors 101, a memory 102, and one or more input/output (I/O) interfaces 103.

The memory (device) 102 has one or more programs stored thereon. When the one or more programs are executed by the one or more processors 101, the one or more processors 101 carry out the service configuration method applied to the ONU as described above with reference to FIG. 1, FIG. 2 or FIG. 3.

The one or more I/O interfaces 103 are connected between the processor 101 and the memory 102, and are configured to enable information interaction between the processor and the memory.

The processor 101 is a device having data processing capability, and includes, but is not limited to, a Central Processing Unit (CPU). The memory 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH). The I/O interface (read/write interface) 103 is connected between the processor 101 and the memory 102, is capable of realizing the information interaction between the processor 101 and the memory 102, and includes, but is not limited to, a data bus (Bus).

In some embodiments, the processor 101, the memory 102 and the I/O interface 103 are connected to each other through a bus 104, and then are connected to other components of a computing device.

FIG. 7 is a schematic structural diagram of an OLT according to the present disclosure. As shown in FIG. 7, the OLT includes one or more processors 201, a memory 202, and one or more I/O interfaces 203.

The memory 202 has one or more programs stored thereon. When the one or more programs are executed by the one or more processors 201, the one or more processors 201 carry out the service configuration method applied to the OLT as described above with reference to FIG. 4 or FIG. 5.

The one or more I/O interfaces 203 are connected between the processor 201 and the memory 202, and are configured to enable information interaction between the processor and the memory.

The processor 201 is a device having data processing capability, and includes, but is not limited to, a CPU. The memory 202 is a device having data storage capability, and includes, but is not limited to, an RAM (more specifically, an SDRAM, a DDR SDRAM, etc.), an ROM, an EEPROM, and a flash memory. The I/O interface (read/write interface) 203 is connected between the processor 201 and the memory 202, is capable of realizing the information interaction between the processor 201 and the memory 202, and includes, but is not limited to, a data bus (Bus).

In some embodiments, the processor 201, the memory 202 and the I/O interface 203 are connected to each other through a bus 204, and then are connected to other components of a computing device.

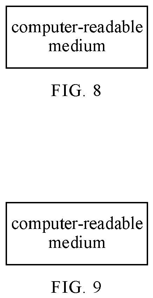

FIG. 8 is a schematic structural diagram of a computer-readable medium according to the present disclosure. The computer-readable medium has a computer program stored thereon. When the computer program is executed by a processor, the operations in the service configuration method applied to an ONU as described above with reference to FIG. 1, FIG. 2 or FIG. 3 are performed.

FIG. 9 is a schematic structural diagram of another computer-readable medium according to the present disclosure. The computer-readable medium has a computer program stored thereon. When the computer program is executed by a processor, the operations in the service configuration method applied to an OLT as described above with reference to FIG. 4 or FIG. 5 are performed.

It should be understood by those of ordinary skill in the art that the functional modules/units in all or some of the operations and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A service configuration method applied to an optical network unit, comprising:
mapping initial service configuration data obtained based on a non-management and control interface protocol to at least one first managed entity at a User Network Interface side under the Management and Control Interface Protocol, and generating first service configuration information of the User Network Interface side;
sending the first service configuration information to an optical line terminal for generating second service configuration information of an Access Node Interface side by the optical line terminal according to the first service configuration information; and
receiving the second service configuration information sent by the optical line terminal, and performing service configuration according to the first service configuration information and the second service configuration information.

2. The service configuration method of claim 1, wherein mapping the initial service configuration data to the at least one first managed entity at the User Network Interface side under the Management and Control Interface Protocol and generating the first service configuration information of the User Network Interface side comprises:
establishing a mapping relationship between the initial service configuration data and an attribute value of each of the at least one first managed entity, and arranging a sequence in which all first managed entities perform service configuration, so as to generate the first service configuration information.

3. The service configuration method of claim 2, wherein after performing the service configuration according to the first service configuration information and the second service configuration information, the method further comprises:
when the initial service configuration data is changed, modifying an attribute value of a corresponding first managed entity, and sending an attribute value modification message to the optical line terminal.

4. The service configuration method of claim 2, wherein the attribute value of the first managed entity comprises: a managed entity instance identification configured to indicate the non-management and control interface protocol corresponding to the initial service configuration data.

5. The service configuration method of claim 1, wherein the non-management and control interface protocol comprises at least one of the Simple Network Management Protocol, the Custom Premise Equipment Wide Area Network Management Protocol, a local WEB configuration protocol, or a factory pre-configured protocol.

6. The service configuration method of claim 1, wherein sending the first service configuration information to the optical line terminal comprises:
synchronously reporting the first service configuration information to the optical line terminal through a management information base.

7. A service configuration method applied to an optical line terminal, comprising:
receiving first service configuration information of a User Network Interface side sent by an optical network unit, and generating second service configuration information of an Access Node Interface side according to the first service configuration information, wherein the first service configuration information is generated after the optical network unit maps initial service configuration data obtained based on a non-management and control interface protocol to at least one first managed entity at the User Network Interface side under the Management and Control Interface Protocol; and
sending the second service configuration information to the optical network unit for performing service configuration by the optical network unit according to the first service configuration information and the second service configuration information.

8. The service configuration method of claim 7, wherein the first service configuration information is generated after the optical network unit establishes a mapping relationship between the initial service configuration data and an attribute value of each of the at least one first managed entity and arranges a sequence in which all first managed entities perform service configuration, and
generating the second service configuration information of the Access Node Interface side according to the first service configuration information comprises:
determining an attribute value of each second managed entity at the Access Node Interface side according to the attribute value of each first managed entity; and
arranging a sequence in which all second managed entities perform service configuration, so as to generate the second service configuration information.

9. An optical network unit, comprising:
one or more processors; and
a memory configured to store one or more programs,
wherein when the one or more programs are executed by the one or more processors, the one or more processors carry out the service configuration method of any one of claims 1 to 6.

10. An optical line terminal, comprising:
one or more processors; and
a memory configured to store one or more programs,
wherein when the one or more programs are executed by the one or more processors, the one or more processors carry out the service configuration method of claim 7 or claim 8.

11. A computer-readable medium having a computer program stored thereon, wherein when the computer program is executed by a processor, the service configuration method of any one of claims 1 to 6 is carried out.

12. A computer-readable medium having a computer program stored thereon, wherein when the computer program is executed by a processor, the service configuration method of claim 7 or claim 8 is carried out.
